# EUROPEAN PATENT APPLICATION

(11) **EP 3 618 040 A1**
(43) Date of publication of application: **04.03.2020**
(21) Application number: 18858488.2
(22) Date of filing: 21.09.2018
(51) Int. Cl.: G09B 23/30, G09B 9/00, G09B 23/28

(54) **MEDICAL SIMULATOR**

(30) Priority: 22.09.2017 JP 2017183087
(71) Applicant: Micoto Technology Inc., Yonago-shi, Tottori 683-0845 (JP)
(72) Inventor: HIYAMA, Yasuaki, Yonago-shi Tottori 683-0845 (JP); MATSUOKA, Masaaki, Yonago-shi Tottori 683-0845 (JP)
(74) Representative: Gill Jennings & Every LLP
(86) International application number: PCT/JP2018/034954
(87) International publication number: WO 2019/059330

(57) **Abstract**

A medical simulator allows a training of a medical procedure performed at least from a nose or a mouth, and includes a skeleton base portion that serves as a base of a shape of a human body at least from a head to a neck portion and an in-body forming portion that is attachable to and detachable from the skeleton base portion and has a shape that simulates a hollow in-body organ including a nasal cavity, an oral cavity, a pharynx, and a larynx, the in-body forming portion being integrally formed using a flexible material.

## Description

### TECHNICAL FIELD

The present invention relates to a medical simulator, and in particular, relates to a simulator that allows for a training of a medical procedure performed at least from the nose or the mouth.

### BACKGROUND ART

With recent advances in modern medicine and more sophisticated medical techniques, there is an increasing demand for medical practitioners having higher skills, which also leads to a demand for improved education for the medical practitioners. In particular, simulation-based education, which employs a model that simulates a living body, has been receiving much attention because it allows for acquisition of skills and implementation of training that are close to actual practices.

Patent Document 1 described below discloses a simulation model for training of caregivers, which is designed specifically for simulation-based education. This modes includes a manikin and a tube for airway intubation. The manikin includes an external shape base having a shape from the head to the chest. Within the external shape base, the manikin includes: a simulated oral cavity; a simulated nasal cavity; a simulated pharynx portion; a simulated larynx portion; a simulated trachea; a simulated bronchus; and part of a simulated esophagus. In addition, a sensing portion is attached at a correct inserting position where the tube is inserted at the time of airway intubation into the simulated trachea or simulated bronchus, and detection means is provided to detect that the top end of the tube reaches the sensing portion.

Furthermore, Patent Document 2 described below discloses an oral-cavity forming body for a medical simulation robot having an excellent maintainability. This oral-cavity forming body includes an oral-cavity forming portion having flexibility and stretchability, formed into a bag shape, and detachably attached to the mouth portion; and a tongue-shaped hollow protruding portion formed integrally with the oral-cavity forming portion and provided in a covering manner on a simulated tongue mechanism portion provided at the mouth portion.

### RELATED ART DOCUMENT

### PATENT DOCUMENT

Patent Document 1: Japanese Patent Application Laid-open No. 2015-18152
Patent Document 2: Japanese Patent Application Laid-open No. 2012-252232

### SUMMARY OF THE INVENTION

### PROBLEM TO BE SOLVED BY THE INVENTION

However, in the model of Patent Document 1 described above, the simulated oral cavity, the simulated nasal cavity, or the like are only formed by wall surfaces that partition the inside spaces corresponding to respect portions of a human-shaped model. Thus, this model is not able to faithfully reproduce the actual states of in-body organs of a patient. For this reason, this model is difficult to provide practical training that is close to actual practices. Moreover, this model is not designed such that the simulated oral cavity, the simulated nasal cavity, or the like are to be replaced.

In the model of Patent Document 2 described above, although the oral-cavity forming body for a robot is designed to be replaceable, it is not targeted at other organs (the nasal cavity, the pharynx, the larynx, or the like) necessary to do a training of medical procedures performed from the nose or mouth.

The present invention has been made in view of the circumstances described above, and provides a medical simulator that allows a highly precise training of medical procedures performed at least from the nose or mouth, the training being close to actual practices.

### MEANS FOR SOLVING THE PROBLEM

A medical simulator according to one aspect of the present invention employs the following configurations in order to solve the problems described above. In other words, the medical simulator according to the aspect allows a training of a medical procedure performed at least from a nose or a mouth, and includes: a skeleton base portion that serves as a base of a shape of a human body at least from a head to a neck portion; and an in-body forming portion that is attachable to and detachable from the skeleton base portion and has a shape that simulates a hollow in-body organ including a nasal cavity, an oral cavity, a pharynx, and a larynx, the in-body forming portion being integrally formed using a flexible material.

The "medical procedure performed from a nose or a mouth" described above means a technique or method for a medical activity performed from a nose or a mouth. The medical activity includes, for example, a medical activity in which a certain tube such as an endoscope is inserted from a nose or a mouth at the time of tracheal intubation, sputum suction, or the like, and a medical activity in which a forceps or the like is inserted from the nose or the mouth to remove a polyp, a tumor, or other lesions that are generated in the nose, mouth, pharynx, larynx, vocal cords, or the like. However, the medical procedure that can be trained using the medical simulator according to the aspect is not limited to these examples described above.

### EFFECT OF THE INVENTION

According to the present invention, it is possible to provide a medical simulator that makes it possible to do a highly precise training that is close to actual practices on medical procedures performed at least from a nose or a mouth.

### BRIEF DESCRIPTION OF THE DRAWINGS

Fig. 1 is a diagram illustrating the external appearance of a medical simulator according to the present exemplary embodiment;
Fig. 2 is a diagram illustrating an inside structure of a human body model according to the present exemplary embodiment;
Fig. 3 is an exploded view illustrating a skeleton base portion and an in-body forming portion;
Fig. 4 is an exploded view illustrating the in-body forming portion and a nose-mouth supporting portion;
Fig. 5 is a sectional schematic view illustrating an in-body forming portion 20.
Fig. 6A is an exploded view illustrating an upper-jaw tooth-row structure portion;
Fig. 6B is a diagram illustrating an upper-jaw tooth-row structure portion that reproduces a state in which teeth have been broken;
Fig. 7 is a perspective view illustrating the skeleton base portion and a portion of a member that is connected to the skeleton base portion;
Fig. 8 is a side view illustrating the skeleton base portion and a portion of a member that is connected to the skeleton base portion;
Fig. 9 is an exploded view illustrating a simulated bronchus portion 120 and the skeleton base portion; and
Figs. 10A, 10B, and 10C are diagrams each illustrating a modification example of a lower-jaw connecting plate.

### DESCRIPTION OF EMBODIMENTS

Below, exemplary embodiments according to the present invention will be described with reference to the drawings. The exemplary embodiments given below are merely examples, and the present invention is not limited to the configurations of the following exemplary embodiments.

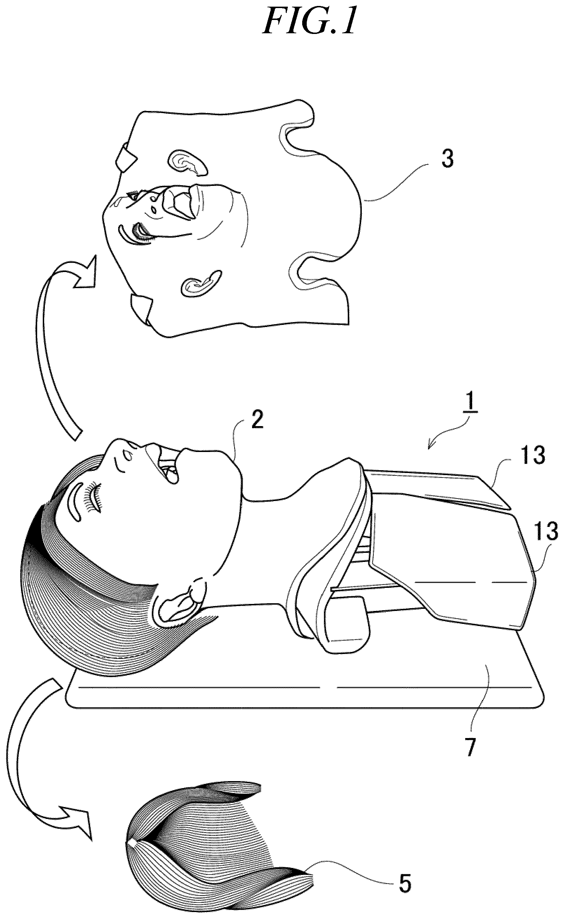

Fig. 1 is a diagram illustrating the external appearance of a medical simulator according to the present exemplary embodiment.

A medical simulator 1 according to the present exemplary embodiment includes a human body model 2, a base table 7 on which the human body model 2 is placed, or the like, and makes it possible to do a training of procedures related to intubation such as nasal-and-oral tracheal intubation, nasal-and-oral endoscopy, and sputum suction. In other words, a user (hereinafter, may also be referred to as a trainee) is able to receive a training of such medical procedures using the human body model 2 that is a human-shaped model. However, medical procedures that can be trained using the medical simulator 1 are not limited to the procedure related to such intubation.

In the following description in connection with the medical simulator 1, the craniocaudal direction, the anteroposterior direction, the left-right direction, the front, the back, and the like are set using the directions used in anatomy of a human body in order to specify the relative positional relationship between individual constituent elements, for the purpose of convenience. More specifically, the direction perpendicular to the frontal plane is referred to as the "anteroposterior direction," the direction perpendicular to the sagittal plane is referred to as the "left-right direction," and the direction perpendicular to the transverse plane (horizontal plane) is referred to as the "craniocaudal direction." In addition, the anterior side of a human body is referred to as the "forward" or the "front"; the posterior side is referred to as "backward" or the "back"; the left-hand side is referred to as "left"; the right-hand side is referred to as "right"; the superior side is referred to as "up, upward, or above"; and the inferior side is referred to as "down, downward, lower or below." In other words, the up-down direction on the paper surface of Fig. 1 is indicated as the anteroposterior direction; the left-right direction on this paper surface is indicated as the craniocaudal direction; and the front-back direction on this paper surface is indicated as the left-right direction.

Furthermore, rotation or swing with the left-right direction being the axial direction is referred to as "craniocaudal rotation" or " craniocaudal swing"; rotation or swing with the anteroposterior direction being the axial direction is referred to as "left-right rotation" or "left-right swing"; and rotation or swing with the craniocaudal direction being the axial direction is referred to as "anteroposterior rotation" or "anteroposterior swing."

The directions expressed in this specification do not necessarily match the top or bottom in the gravity direction, and do not limit the modes to which the medical simulator 1 is utilized.

In addition, a surface of the human body that is in direct contact with the outside world may be referred to as the "external body surface," and the surface of the food passageway extending from the oral cavity to the digestive organ and the surface of the airway extending from the nasal cavity to the lung may be each referred to as the "internal body surface." Furthermore, the side opposite to the outer side of the "external body surface" or "internal body surface" may be referred to as an "inner side" or "inside."

The external body surface of the human body model 2 is covered with a skin mask 3 that simulates the human-body external shape from the head to the neck portion (including portions of the shoulder and the chest), and a wig 5 is attached to the head portion.

The skin mask 3 is made of material having flexibility such as silicone rubber.

The term "flexibility" as used in this specification means a property that it is less likely to break or be damaged even if it is bent, and may have either of or both of stretchability and elasticity.

In the present exemplary embodiment, the skin mask 3 is formed of one sheet having an opening corresponding to an oral slit of a human body and also having the shape and colors that simulate eyebrows, eyelashes, the nose, ears, the labium, and the like. It is preferable to form at least the vicinity of the opening of the skin mask 3 using a material having stretchability. This makes it possible to reproduce an actual feeling occurring at the time of manually opening the mouth portion of the human body model 2. Note that, in the present exemplary embodiment, the skin mask 3 is not provided at the chest of the human body model 2, and the simulated lung portion 13 is exposed. However, the material, the shape, and the size of the skin mask 3 are not limited to those illustrated in Fig. 1.

The skin mask 3 and the wig 5 are formed so as to be attachable to and detachable from the human body model 2. More specifically, the skin mask 3 has zip fasteners at left and right end portions thereof. With these zip fasteners, the left end portion and the right end portion are connected to each other on the back of the human body model 2. In addition, the skin mask 3 has point-type fasteners on the back thereof and at portions corresponding to the lower jaw. The point-type fasteners make it possible to join it with a lower-jaw bone portion 62 that will be described later.

The base table 7 is provided to place the human body model 2 thereon. In the example in Fig. 1, the human body model 2 is placed on the base table 7 on its back. However, the human body model 2 may have a structure in which the posture can be switched, for example, into a posture in which it lies on its side, depending on medical procedures to be trained.

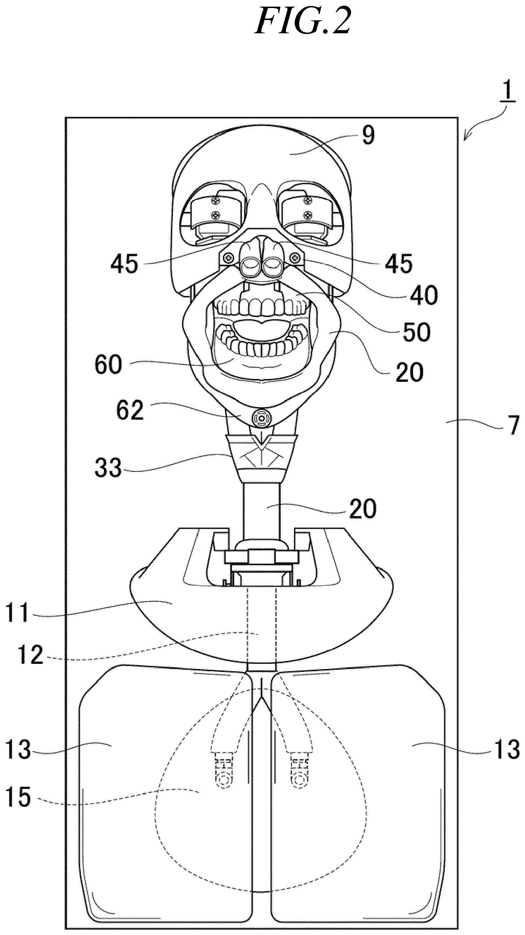

Fig. 2 is a diagram illustrating the inside structure of the human body model 2 according to the present exemplary embodiment, and is a diagram when viewed from the forward side of the human body model 2.

The human body model 2 has, on the inner side of the skin mask 3 and the wig 5, an inside structure as illustrated in Fig. 2. The inside structure of the human body model 2 is configured with an in-body organ structure, a skeleton base portion, or the like.

The skeleton base portion is a group of constituent elements that form a framework serving as the base of the shape of the human body model 2, and is made of metal, plastic, or other materials having strength and hardness that can withstand operations made by a trainee. In Fig. 2, a simulated skull 9, the lower-jaw bone portion 62, and a chest cover 11 are illustrated as the skeleton base portion. The simulated skull 9, the lower-jaw bone portion 62, and the chest cover 11 have a shape retaining structure provided in order to form the shape at and around the head, the lower jaw, and the chest of the human body model 2.

The in-body organ structure is a group of constituent elements that form shapes that each simulate a hollow in-body organ such as the oral cavity, the nasal cavity, the pharynx, the larynx, the trachea, the esophagus, the bronchus, and the stomach. In Fig. 2, an in-body forming portion 20, a simulated bronchus portion 12, the simulated lung portion 13, and a simulated stomach portion 15 are illustrated as the in-body organ structure.

Two lower end portions of the simulated bronchus portion 12 are each connected to the simulated lung portion 13. The simulated lung portion 13 includes two bag bodies, and is formed so as to be able to expand with a gas sent from the simulated bronchus portion 12 side.

The simulated stomach portion 15 is also a bag body, and is connected through a stomach connecting tube to an end portion of a portion (esophagus forming portion 26) of the in-body forming portion 20 that forms the esophagus.

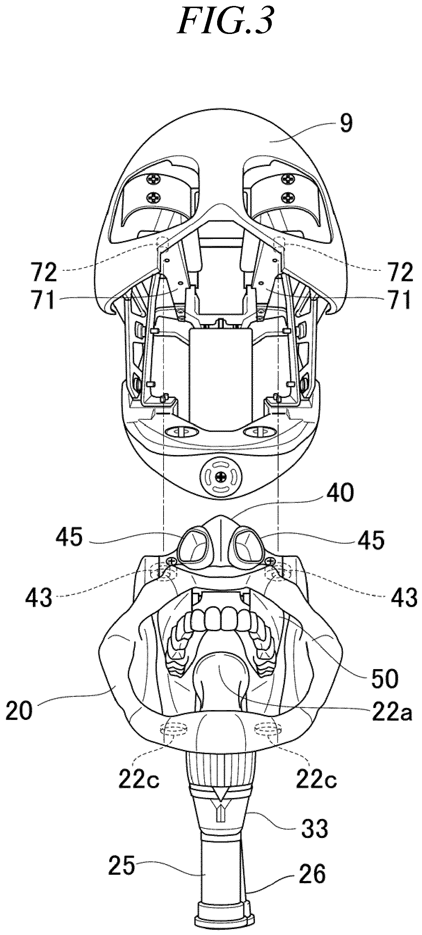

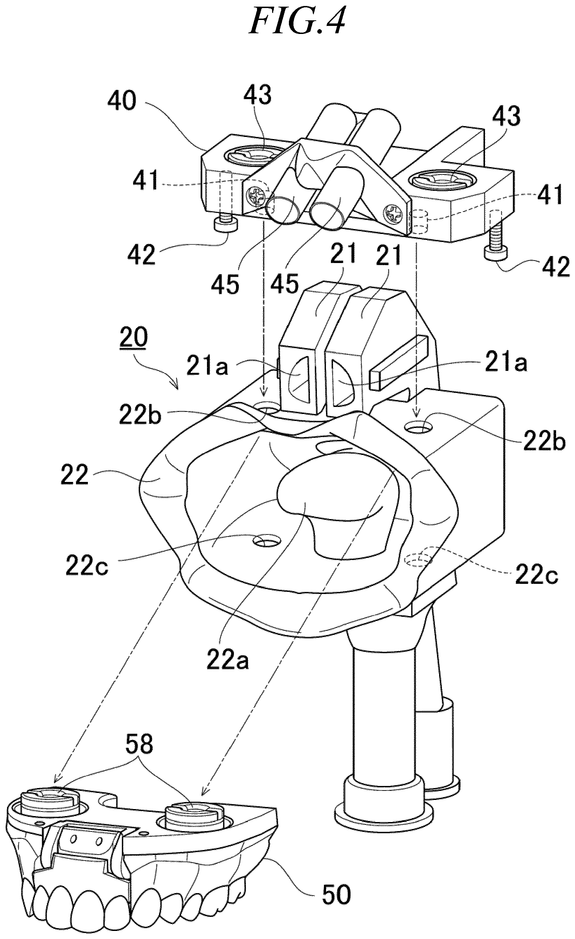

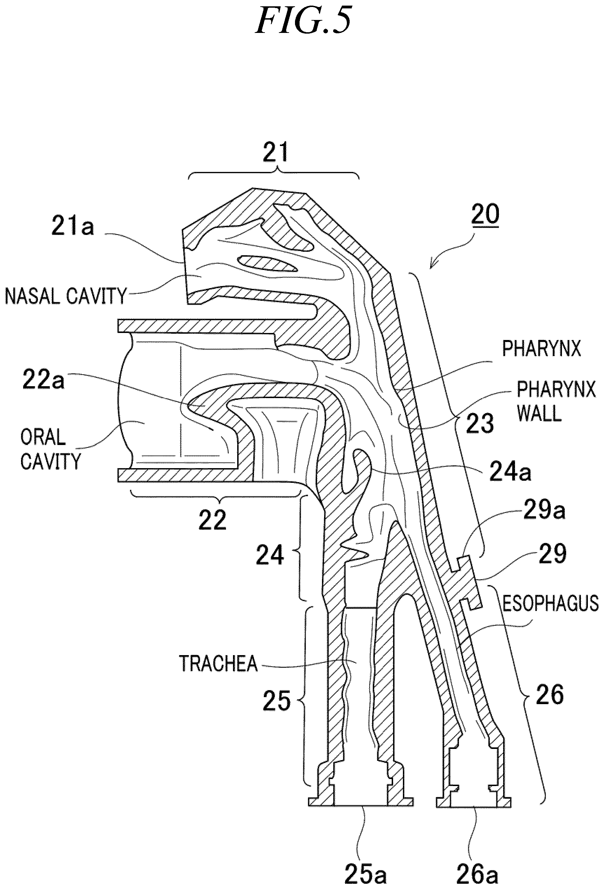

Below, the in-body forming portion 20 will be described in detail with reference to Figs. 3, 4, and 5. Fig. 3 is an exploded view illustrating the skeleton base portion and the in-body forming portion 20. Fig. 4 is an exploded view illustrating the in-body forming portion 20 and the nose-mouth supporting portion 40. Fig. 5 is a sectional schematic view illustrating the in-body forming portion 20.

As illustrated in each of the drawings, the in-body forming portion 20 has a shape that simulates a hollow in-body organ including the nasal cavity, the oral cavity, the pharynx, the larynx, the trachea, and the esophagus, and is integrally formed using a flexible material. Each portion that forms each of the in-body organs in the in-body forming portion 20 in a simulating manner are referred to as a nasal-cavity forming portion 21, an oral-cavity forming portion 22, a pharynx forming portion 23, a larynx forming portion 24, a trachea forming portion 25, and an esophagus forming portion 26.

The "integrally formed" as used herein means that forming is performed integrally in a seamless manner. Thus, the "integrally formed" does not include forming one tubular body by joining end portions of sheet-shaped members, or forming one object by joining, with each other, members formed separately from each other.

There is no limitation as to such a method for forming the in-body forming portion 20. For example, it may be possible to acquire three-dimensional information on a scanned in-body organ using computerized tomography (CT), magnetic resonance imaging (MRI), or the like, and use a mold prepared on the basis of the three-dimensional information to form the in-body forming portion 20, or use a three-dimensional printer to form the in-body forming portion 20.

No limitation is given to the flexible material used to form the in-body forming portion 20, provided that the material is a material having flexibility such as silicone rubber. It is preferable that, as with the in-body organs to be simulated, the in-body forming portion 20 have stretchability and elasticity in which, in accordance with application of pulling force, the shape thereof extends in the application direction, and the shape substantially returns to the original state once the pulling force is removed.

As the in-body forming portion 20 is integrally formed using a flexible material as described above, it is possible to eliminate the joining seam and make the hollow in-body organ reproduced by the in-body forming portion 20 closer to the actual object, and also possible to achieve real medical simulation.

The in-body forming portion 20 has a simulated epiglottis 24a having a shape that simulates the epiglottis (see Fig. 5). More specifically, as illustrated in Fig. 5, the simulated epiglottis 24a is formed as a tongue-shaped body that protrudes upward at an acute angle from a portion of the internal body surface closer to the larynx than the lingual radix portion of the simulated tongue portion 22a, and a portion corresponding to the epiglottic vallecula is formed on the oral cavity side of the simulated epiglottis 24a and between the simulated epiglottis 24a and the lingual radix portion of the simulated tongue portion 22a. Note that it may be said that the simulated epiglottis 24a is a portion of the larynx forming portion 24 of the in-body forming portion 20.

As illustrated in Fig. 5, the in-body forming portion 20 has an external shape in which: the nasal-cavity forming portion 21 and the oral-cavity forming portion 22 are separate from each other; the pharynx forming portion 23 and the larynx forming portion 24 are combined in back; and the trachea forming portion 25 and the esophagus forming portion 26 are separate from each other below. In addition, the nasal-cavity forming portion 21 includes a left nasal-cavity forming portion and a right nasal-cavity forming portion, and has an external shape in which both are separate from each other.

The hollow regions formed by these portions simulate respective in-body organs and communicate with each other.

Furthermore, the simulated tongue portion 22a is provided at a portion of the oral-cavity forming portion 22. The simulated tongue portion 22a is shaped so as to protrude into the oral cavity region formed in a hollow state with the oral-cavity forming portion 22.

As described above, as the in-body forming portion 20 has flexibility, it may deteriorate or be damaged due to repeated use of the medical simulator 1. In addition, the shape or size of in-body organs simulated by the in-body forming portion 20 differs depending on patients, and hence, it is desirable to do training using various types of in-body organs in order to further increase the ability of a trainee for medical procedures.

In view of this, in the present exemplary embodiment, the in-body forming portion 20 is configured so as to be easily detached from the skeleton base portion to easily interchange plural types of in-body forming portions 20 or replace old and new in-body forming portions 20. Furthermore, it is also possible to form, on the internal body surface, an in-body forming portion 20 that simulates a polyp, a tumor, or other lesions. Using such an in-body forming portion 20, it is possible to train a procedure for removing a polyp, a tumor, or other lesions.

As the configuration for achieving this, there is provided a nose-mouth supporting portion 40 that is attachable to and detachable from the in-body forming portion 20 and the skeleton base portion. With this configuration, the in-body forming portion 20 is attachable to and detachable from the skeleton base portion in a state where the nose-mouth supporting portion 40 is attached, as illustrated in Fig. 3.

In a state of being attached to the in-body forming portion 20, the nose-mouth supporting portion 40 lies in a space between the nasal-cavity forming portion 21 and the oral-cavity forming portion 22 to support the nasal-cavity forming portion 21, and holds the upper wall of the oral-cavity forming portion 22 in a sandwiching manner in conjunction with an upper-jaw tooth-row structure portion 50 disposed on the oral cavity side of the oral-cavity forming portion 22. In other words, the nose-mouth supporting portion 40 supports the nasal-cavity forming portion 21 on the upper surface side thereof, and supports the oral-cavity forming portion 22 on the lower surface side thereof.

Yet more specifically, the nose-mouth supporting portion 40 has a nasal-cavity fixing portion on the upper surface side thereof, the nasal-cavity fixing portion supporting and fixing the nasal-cavity forming portion 21 from below and also from left and right sides. In addition, in front of the nasal-cavity fixing portion, there are two nostril tube portions 45 formed using a material harder than the nasal-cavity forming portion 21. The nostril tube portions 45 each correspond to a nasal bone and cartilage, and are tubular bodies that form the shape of the nose. The forward end portion and the backward end portion of each of the nostril tube portions 45 are opened, and each of the backward end portions is fitted into an opening 21a of the nasal-cavity forming portion 21. With this configuration, the nasal-cavity forming portion 21 is also supported and fixed from forward by the nose-mouth supporting portion 40 (nostril tube portion 45).

The nose-mouth supporting portion 40 includes two protruding portions 41 protruding downward on the lower surface side thereof and at left and right portions thereof that are spaced apart from each other. The protruding portions 41 are respectively inserted and fitted through two through holes 22b provided in the upper wall of the oral-cavity forming portion 22 of the in-body forming portion 20, into two recessed portions 58 provided and directed upward on the upper surface side of the upper-jaw tooth-row structure portion 50.

It may be possible to configure the protruding portions 41 of the nose-mouth supporting portion 40 and the recessed portions 58 of the upper-jaw tooth-row structure portion 50 so that a permanent magnet is embedded in either one of the protruding portion 41 and the recessed portion 58 and the other one is formed using a ferromagnetic material such as iron. With this configuration, as the protruding portions 41 are inserted and fitted through the through holes 22b into the recessed portions 58, it is possible to stick the nose-mouth supporting portion 40 and the upper-jaw tooth-row structure portion 50 to each other through magnetic force with the upper wall of the oral-cavity forming portion 22 being disposed therebetween. In addition, using a permanent magnet having a magnetic force less than human power, it is possible to separate, with human power, the nose-mouth supporting portion 40 and the upper-jaw tooth-row structure portion 50 that have been sticked together.

However, the structure for holding the upper wall of the oral-cavity forming portion 22 by the nose-mouth supporting portion 40 and the upper-jaw tooth-row structure portion 50 in a sandwiching manner is not limited to the example described above, provided that the nose-mouth supporting portion 40 and the upper-jaw tooth-row structure portion 50 can be connected with an appropriate strength in a state where the oral-cavity forming portion 22 is disposed therebetween, and can be separated from each other through a certain method. For example, the nose-mouth supporting portion 40 and the upper-jaw tooth-row structure portion 50 may be connected to each other using a screw structure, or may be connected through spring elasticity or frictional force. Note that it is desirable that the nose-mouth supporting portion 40 and the upper-jaw tooth-row structure portion 50 have a structure in which they can be detached from each other by hand without using any tool.

With the nose-mouth supporting portion 40 having such a structure, it is possible to support and fix the nasal-cavity forming portion 21 and the oral-cavity forming portion 22 that have flexibility, and it is also possible to detach the nose-mouth supporting portion 40 from the in-body forming portion 20 through simple operation. More specifically, the backward end portion of the nostril tube portion 45 is pulled out from the opening 21a of the nasal-cavity forming portion 21, and the upper-jaw tooth-row structure portion 50 is separated from the nose-mouth supporting portion 40, whereby the nose-mouth supporting portion 40 can be detached from the in-body forming portion 20. On the contrary, the backward end portion of the nostril tube portion 45 is inserted into the opening 21a of the nasal-cavity forming portion 21, and the upper-jaw tooth-row structure portion 50 is connected to the nose-mouth supporting portion 40, whereby the nose-mouth supporting portion 40 can be attached to the in-body forming portion 20.

It is preferable that the nose-mouth supporting portion 40 is formed using a material harder than at least the nasal-cavity forming portion 21 and the oral-cavity forming portion 22 in order to firmly support the nasal-cavity forming portion 21 and the oral-cavity forming portion 22, and increase the handleability. For example, the nose-mouth supporting portion 40 is formed using a material such as metal and plastic.

Furthermore, as the structure for achieving the connection with the skeleton base portion, the nose-mouth supporting portion 40 includes two recessed portions 43 (skeleton connecting portions) directed upward and provided on the left and right sides in a manner that an area (nasal-cavity fixing portion) supporting, from below, the nasal-cavity forming portion 21 of the in-body forming portion 20 is disposed between these recessed portions.

In addition, as the skeleton base portion, there is provided an upper-jaw supporting plate 71 provided in the vicinity of the upper jaw of the head of the human body model 2 so as to extend in the anteroposterior direction. The upper-jaw supporting plate 71 includes two protruding portions 72 protruding downward and provided at left and right portions of the lower surface thereof, the left and right portions being spaced apart from each other.

It may be possible to It may be possible to configure the protruding portions 72 of the upper-jaw supporting plate 71 and the recessed portions 43 of the nose-mouth supporting portion 40 in a manner that a permanent magnet is embedded in either one of the protruding portion 72 and the recessed portion 43 and the other one is formed using a ferromagnetic material such as iron. With this configuration, as the protruding portions 72 are inserted and fitted into the recessed portions 43, it is possible to stick the upper-jaw supporting plate 71 serving as the skeleton base portion and the nose-mouth supporting portion 40 to each other through magnetic force. Using a permanent magnet having a magnetic force less than human power, it is possible to separate, with human power, the upper-jaw supporting plate 71 and the nose-mouth supporting portion 40 that have been sticked together.

In order to facilitate the operation described above, the nose-mouth supporting portion 40 further includes two knob portions 42 provided at both of left and right ends on the lower surface side thereof. The knob portions 42 are rod-shaped bodies that extend downward. A user can pinch the two knob portions 42 between the thumb and the middle finger or the like with one hand, and hence, can easily separate, from the upper-jaw supporting plate 71, the nose-mouth supporting portion 40 in a state of being attached to the in-body forming portion 20.

In the present exemplary embodiment, the nose-mouth supporting portion 40 includes the recessed portions 43 as the skeleton connecting portions that allows it to be attached to or detached from the skeleton base portion. However, it may be possible to use any mode of the skeleton connecting portion, provided that the skeleton connecting portion can connect and separate the nose-mouth supporting portion 40 and the skeleton base portion with appropriate strength. For example, as the skeleton connecting portion, it may be possible to use either one of a protruding portion having a side surface including a plunger having an appropriate elastic force and a locking recessed portion that can lock the ball of the ball plunger. Alternatively, a screw or a screw hole may be used as the skeleton connecting portion. However, it is desirable that the skeleton connecting portion have a mode in which both can be detached by hand without using any tool, in order to achieve easy detachment.

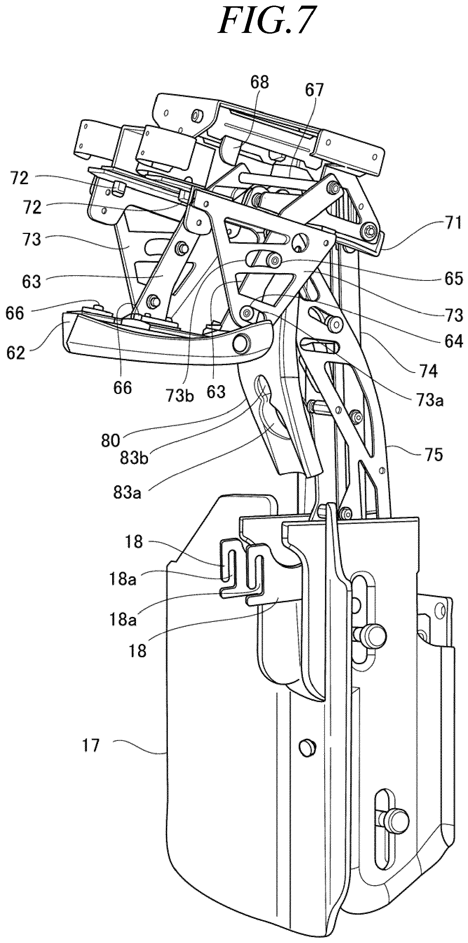

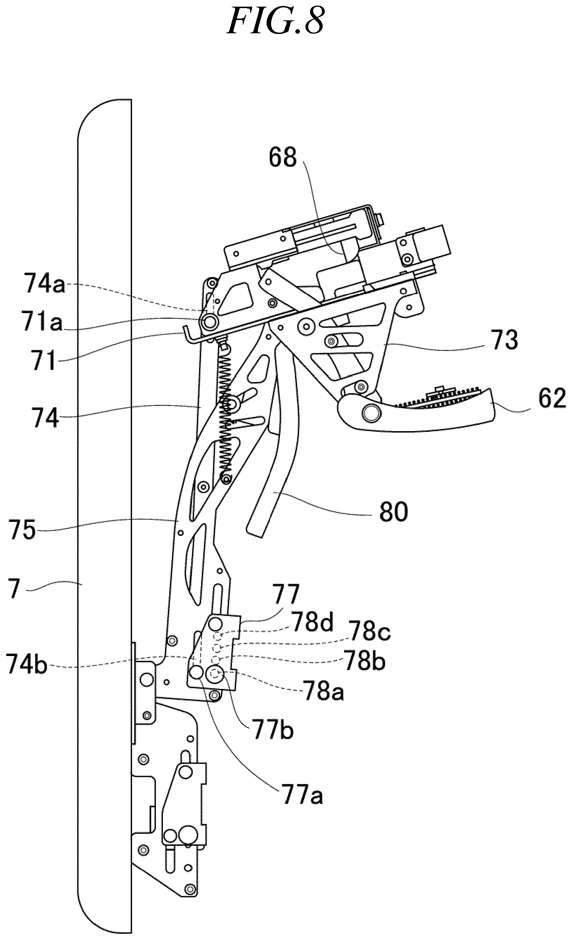

As the structure for achieving the connection between the skeleton base portion and the in-body forming portion 20, the in-body forming portion 20 further includes a plate connecting portion 29 on the back surface side, the plate connecting portion 29 allowing attachment and detachment with respect to the pharynx wall plate 80 (Figs. 7 and 8). In the present exemplary embodiment, the plate connecting portion 29 is a protrusion-shaped member provided so as to extend backward from the vicinity of the boundary between the pharynx forming portion 23 and the esophagus forming portion 26 on the back surface side of the in-body forming portion 20, and is provided with a flange portion 3a at the top end thereof.

The pharynx wall plate 80 is a plate-shaped member provided so as to extend in the craniocaudal direction, and is connected to the second cervical-spine link 75 serving as the skeleton base portion (Figs. 7 and 8). The pharynx wall plate 80 has a front surface that supports, from the back surface side, a portion of the in-body forming portion 20 (pharynx forming portion 23) that corresponds to the pharynx wall. The pharynx wall plate 80 includes a fitting hole that penetrates in the anteroposterior direction (thickness direction), and allows the plate connecting portion 29 to be inserted and fitted. The fitting hole includes a large opening 83a that allows the flange portion 29a to be inserted and fitted, and a small opening 83b that can lock the edge portion of the flange portion 29a and allows a portion of the plate connecting portion 29 other than the flange portion 29a to be inserted and fitted, these openings being arranged alongside and continuing to each other in the craniocaudal direction.

With this configuration, by inserting and fitting the plate connecting portion 29 into the large opening 83a of the pharynx wall plate 80, and sliding it upward, it is possible to cause the edge portion of the flange portion 29a of the plate connecting portion 29 to be locked in the small opening 83b, and connect and fix the in-body forming portion 20 and the pharynx wall plate 80 to each other.

However, the mode of the plate connecting portion 29 provided in the in-body forming portion 20 is not limited to the example described above. For example, the plate connecting portion 29 may be achieved with a hook-and-loop fastener or point-type fastener. In the former case, the pharynx wall plate 80 may has a hook-and-loop fastener of which type differs from that of the plate connecting portion 29, instead of the fitting holes (83a and 83b). However, it is desirable that the plate connecting portion 29 have a mode in which the shape thereof is not raised from the internal body surface of the in-body forming portion 20, in a state of being connected to the pharynx wall plate 80. This is because this may lead to an unnatural internal body surface, and may result in a factor that inhibits the real medical simulation. In the present exemplary embodiment, as the plate connecting portion 29 is fitted into the fitting holes (83a and 83b) of the pharynx wall plate 80, the shape thereof is less like to be raised from the internal body surface formed by the in-body forming portion 20.

With the nose-mouth supporting portion 40 and the in-body forming portion 20 as described above, it is possible to firmly fix the in-body forming portion 20 having flexibility with respect to the skeleton base portion, and at the same time, it is possible to easily perform attachment and detachment. More specifically, by separating the nose-mouth supporting portion 40 from the upper-jaw supporting plate 71, and causing the plate connecting portion 29 of the in-body forming portion 20 to be detached from the pharynx wall plate 80, it is possible to detach the in-body forming portion 20 from the skeleton base portion. On the contrary, by causing the nose-mouth supporting portion 40 to be connected to the upper-jaw supporting plate 71, and causing the plate connecting portion 29 to be connected to the pharynx wall plate 80, it is possible to attach the in-body forming portion 20 to the skeleton base portion.

It should be noted that the bottom wall of the oral-cavity forming portion 22 of the in-body forming portion 20 is held by a lower-jaw tooth-row structure portion 60, which will be described later, and the lower-jaw bone portion 62 in a sandwiching manner. Thus, in a case where the nose-mouth supporting portion 40 and the in-body forming portion 20 are detached from the skeleton base portion, the lower-jaw tooth-row structure portion 60 also needs to be detached from the lower-jaw bone portion 62, and this operation can be easily performed.

Furthermore, the simulated thyroid cartilage portion 33 is attached detachably to the larynx forming portion 24 of the in-body forming portion 20.

The simulated thyroid cartilage portion 33 is a tubular member formed using a material harder than the in-body forming portion 20. The simulated thyroid cartilage portion 33 is inserted from the lower end portion of the trachea forming portion 25 of the in-body forming portion 20, and is slid upward, whereby it is possible to attach the simulated thyroid cartilage portion 33 to the larynx forming portion 24. On the contrary, the simulated thyroid cartilage portion 33 can be detached from the lower end portion of the trachea forming portion 25.

Meanwhile, in a case where the blade of a laryngoscope is brought into contact with a tooth of a patient in an excessively strong manner at the time of tracheal intubation, the tooth of the patient may be broken or damaged. Such an incident may similarly occur not only at the time of tracheal intubation but also with a direct laryngoscope (tubular tool made of metal) used at the time of an operation for cut a polyp or other lesions on the vocal cords or the larynx. The present exemplary embodiment uses the upper-jaw tooth-row structure portion 50 to make it possible to reproduce such an incident.

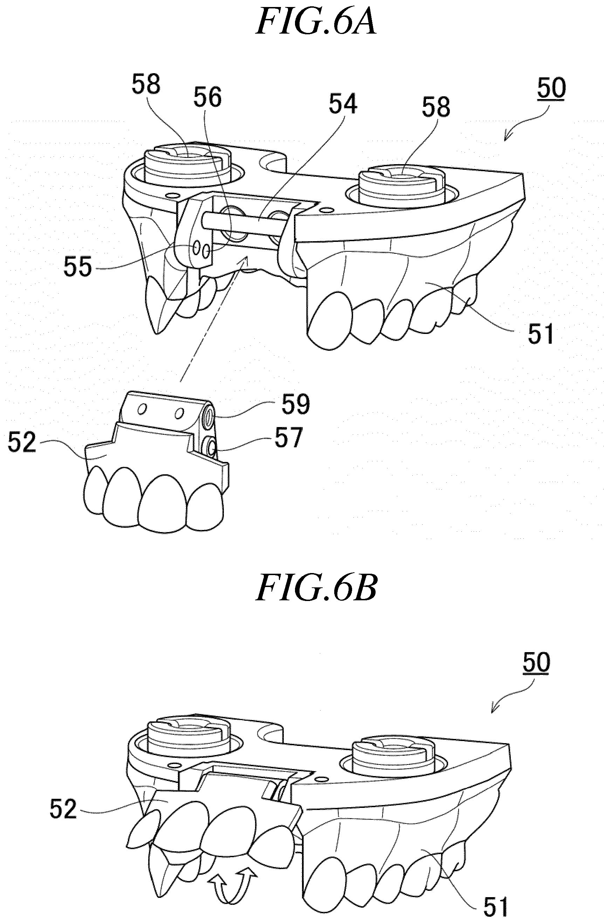

Below, the upper-jaw tooth-row structure portion 50 will be described in detail with reference to Figs. 6. Fig. 6A is an exploded view illustrating the upper-jaw tooth-row structure portion 50. Fig. 6B is a diagram illustrating the upper-jaw tooth-row structure portion 50 that reproduces a state in which teeth have been broken.

The upper-jaw tooth-row structure portion 50 has a shape that simulates the upper-jaw tooth row, and is disposed within the oral cavity portion formed by the oral-cavity forming portion 22 of the in-body forming portion 20 as described above.

The upper-jaw tooth-row structure portion 50 includes a movable tooth-row portion 52 having a shape that simulates a first tooth row serving as a portion of tooth row at the forward and center, the first tooth row including at least the central incisor (that is, anterior teeth) in the upper jaw, a fixed tooth-row portion 51 that has a shape that simulates the remaining second tooth row and swingably supports the movable tooth-row portion 52, and swing restricting means that restricts swing of the movable tooth-row portion 52.

In the present exemplary embodiment, the first tooth row simulated by the movable tooth-row portion 52 includes four teeth including central incisors in the upper jaw and lateral incisors in the upper jaw. In addition, the movable tooth-row portion 52 includes a through hole 59 pierced in the left-right direction and located in the upper portion. On the other hand, the fixed tooth-row portion 51 includes a recessed portion provided at the front center portion (at the position of the first tooth row) and recessed backward, and a supporting shaft 54 is disposed between the left and right side walls of this recessed portion. In a state where the supporting shaft 54 of the fixed tooth-row portion 51 passes through the through hole 59, the movable tooth-row portion 52 is fitted into the recessed portion of the fixed tooth-row portion 51, and is pivotally supported by the supporting shaft 54 in a swingable manner.

The swing restricting means restricts rotation of the movable tooth-row portion 52 at a position where the second tooth row and the first tooth row form a line of the upper-jaw tooth row, and removes the restriction with application of a predetermined external force. Here, the "predetermined external force" is desirable to be set at a level of force that breaks a normal tooth.

In the present exemplary embodiment, as this swing restricting means, the ball plunger 57 of the movable tooth-row portion 52 and the locking recessed portions 55 and 56 of the fixed tooth-row portion 51 are provided. More specifically, the ball plunger 57 is provided on both of left and right sides of the movable tooth-row portion 52. In addition, the locking recessed portions 55 and 56 are recessed portions that each lock the ball plunger 57, and are provided on left and right side walls of the recessed portion of the fixed tooth-row portion 51. The ball plunger 57 includes a ball retained so as to be able to eject and retract with respect to each of the left and right side surfaces of the movable tooth-row portion 52 in a state where a portion of the circumference surface thereof protrudes from each of the left and right side surfaces of the movable tooth-row portion 52, and a spring that always applies urging force in a direction in which the ball protrudes. The locking recessed portions 55 and 56 are recessed in the direction in which the ball of the ball plunger 57 protrudes, and receives and locks the ball that ejects with the elastic force of the spring. On the contrary, at the time of application of an external force that exceeds the ball locking force by the locking recessed portions 55 and 56 and the urging force of the ball of the ball plunger 57, the ball depresses with respect to the side surface of the movable tooth-row portion 52, and is detached from the locking recessed portions 55 and 56. It is preferable to set the urging force of the ball plunger 57 so that this external force is the "predetermined force" described above. As described above, the ball plunger 57 and the locking recessed portions 55 and 56 can restrict the swing of the movable tooth-row portion 52, and remove the restriction.

In the present exemplary embodiment, the two locking recessed portions 55 and 56 are provided at positions that are spaced apart from each other. In other words, in the present exemplary embodiment, the swing restricting means restricts the swing of the movable tooth-row portion 52 at two positions. More specifically, the locking recessed portion 56 is disposed at a position where the first tooth row and the second tooth row form a line of the upper-jaw tooth row at the time of locking the ball of the ball plunger 57 of the movable tooth-row portion 52. In addition, the locking recessed portion 55 is disposed at a position where the top of the first tooth row is directed forward at the time of locking the ball. This enables the movable tooth-row portion 52 to swing mainly between the position where the first tooth row and the second tooth row form a line of the upper-jaw tooth row and the position where the top of the first tooth row is directed forward.

However, the structure for achieving the swing restricting means is not limited to the example of the present exemplary embodiment. For example, it may be possible to employ a configuration in which only the locking recessed portion 56 is provided and the locking recessed portion 55 is not provided. In addition, three or more locking recessed portions may be provided. Furthermore, instead of the ball plunger 57, a pin plunger or other types of plungers may be used.

In the present exemplary embodiment, the human body model 2 is also configured so as to be able to faithfully reproduce movement of the lower jaw at the time of opening and closing the mouth, and also reproduce movement of elevation of the lower jaw (bending the neck portion backward) at the time of tracheal intubation.

Below, the structure for reproducing such movement of the human body model 2 will be described with reference mainly to Figs. 7 and 8. Fig. 7 is a perspective view illustrating the skeleton base portion and a portion of members connected to the skeleton base portion. Fig. 8 is a side view illustrating the skeleton base portion and a portion of members connected to the skeleton base portion. Note that, as can be seen, Fig. 8 illustrates part of the configuration illustrated in Fig. 7.

First, the main configuration of the skeleton base portion will be described. The skeleton base portion includes, at the main configurations, a first cervical-spine link 74, a second cervical-spine link 75, and an upper-jaw supporting plate 71.

The upper-jaw supporting plate 71 is a core member of the framework of the head of the human body model 2, and is provided in the vicinity of the upper jaw of the head of the human body model 2 so as to extend in the anteroposterior direction. In this specification, in addition to a plate- shaped member provided in the vicinity of the upper jaw of the head of the human body model 2 so as to extend in the anteroposterior direction, members provided so as to be fixed directly to the plate- shaped member are also expressed as the upper-jaw supporting plate 71, for the purpose of explanation.

The upper-jaw supporting plate 71 is supported by a second cervical-spine link 75, which will be described later, at the center in the left-right direction and at a position more backward than the center in the anteroposterior direction in a manner such that the craniocaudal swing can be performed.

In addition, as described above, the upper-jaw supporting plate 71 has a lower surface including two protruding portions 72 that allow the nose-mouth supporting portion 40 to be attached or detached, and supports the upper-jaw tooth-row structure portion 50 through the nose-mouth supporting portion 40. The upper-jaw supporting plate 71 has the upper surface side connected to a structure for retaining the simulated skull 9 and a structure for forming the shape of eyes, and also has the lower surface side provided with two lower-jaw connecting plates 73, which will be described later, so as to extend.

The first cervical-spine link 74 and the second cervical-spine link 75 are core members of the framework of the neck portion of the human body model 2, and are provided from the chest to the head of the human body model 2 so as to extend in the craniocaudal direction. In the present exemplary embodiment, the first cervical-spine link 74 and the second cervical-spine link 75 are each formed of a pair of two plate-shaped members arranged at left and right. They are arranged in a manner such that the two plate-shaped members of the first cervical-spine links 74 are disposed between the two plate-shaped members of the second cervical-spine links 75. After this, for the purpose of explanation, either one of the two pairs of plate-shaped members that respectively form the first cervical-spine link 74 and the second cervical-spine link 75 is used to describe the first cervical-spine link 74 and the second cervical-spine link 75, unless explanation is specifically needed.

The second cervical-spine link 75 has a lower end portion having a shape that protrudes backward, and is connected to the base table 7 at this protruding end portion. The second cervical-spine link 75 slightly curves forward in and around the center portion in the craniocaudal direction, and is connected to the upper-jaw supporting plate 71 at the upper end portion thereof.

The first cervical-spine link 74 is disposed between the two second cervical-spine links 75, and is supported at the lower end portion thereof so as to be able to slide relatively to the second cervical-spine link 75 in the craniocaudal direction. The first cervical-spine link 74 has an upper end portion that guides the backward end portion of the upper-jaw supporting plate 71 sliding in the craniocaudal direction. The relationship between the first cervical-spine link 74, the second cervical-spine link 75, and the upper-jaw supporting plate 71 will be described in detail later.

Next, the structure for achieving movement of the lower jaw at the time of opening and closing the mouth will be described in detail. As this structure, the skeleton base portion includes the lower-jaw bone portion 62, lower-jaw supporting plates 63, and the lower-jaw connecting plate 73.

The lower-jaw bone portion 62 has a substantially U-shape having the forward portion closed when viewed from above. The lower-jaw bone portion 62 has an upper surface including two protruding portions 66 each serving as a connecting portion to the lower-jaw tooth-row structure portion 60. The protruding portions 66 are inserted and fitted into recessed portions provided in the lower surface of the lower-jaw tooth-row structure portion 60, via through holes 22c provided in the bottom wall of the oral-cavity forming portion 22 of the in-body forming portion 20. This configuration enables the lower-jaw bone portion 62 and the lower-jaw tooth-row structure portion 60 to hold the bottom wall of the oral-cavity forming portion 22 of the in-body forming portion 20 in a sandwiching manner.

The lower-jaw supporting plates 63 are two plate-shaped members that extend upward from the left and right backward end portions of the lower-jaw bone portion 62 up to a position beyond the upper-jaw supporting plate 71. In the following description, for the purpose of explanation, either one of the two lower-jaw supporting plates 63 is used to describe the lower-jaw supporting plates 63 unless explanation is specifically needed.

The lower-jaw supporting plate 63 includes a first swing shaft portion 64 and a second swing shaft portion 65. The first swing shaft portion 64 and the second swing shaft portion 65 are provided at positions spaced apart from each other in a direction (craniocaudal direction) in which the lower-jaw supporting plate 63 extends, so as to protrude and extend toward the left or right outside, and each serve as a swing shaft for the lower-jaw supporting plate 63. In the present exemplary embodiment, the first swing shaft portion 64 is provided slightly above the lower end of the lower-jaw supporting plate 63. The second swing shaft portion 65 is provided above the first swing shaft portion 64 and below the upper-jaw supporting plate 71. The first swing shaft portion 64 and the second swing shaft portion 65 are engaged with the lower-jaw connecting plate 73 disposed on the left or right outer side of the lower-jaw supporting plate 63.

The lower-jaw connecting plate 73 includes two plate-shaped members provided so as to extend from both of the left and right end portions of the upper-jaw supporting plate 71. The two pieces of lower-jaw connecting plate 73 are respectively provided so as to be adjacent to the left or right outer side of the two lower-jaw supporting plates 63. In the following description, for the purpose of explanation, either one of the two lower-jaw connecting plates 73 are used to describe the lower-jaw connecting plates 73 unless explanation is specifically needed.

The lower-jaw connecting plate 73 includes a first shaft guiding portion 73a that is engaged with the first swing shaft portion 64 in a slidable manner and also guides it, and a second shaft guiding portion 73b that is engaged with the second swing shaft portion 65 in a slidable manner and also guides it. In the present exemplary embodiment, the first shaft guiding portion 73a and the second shaft guiding portion 73b are through holes that each have a width that allows the first swing shaft portion 64 or the second swing shaft portion 65 to be inserted and fitted, the through holes penetrating in the thickness direction of the lower-jaw connecting plate 73. The first shaft guiding portion 73a guides the first swing shaft portion 64 sliding when the lower-jaw supporting plate 63 swings with the second swing shaft portion 65 being the axis. The second shaft guiding portion 73b guides the second swing shaft portion 65 sliding when the lower-jaw supporting plate 63 swings with the first swing shaft portion 64 being the axis.

Here, the first shaft guiding portion 73a and the second shaft guiding portion 73b are formed such that the distance of slide of the second swing shaft portion 65 is longer than the distance of slide of the first swing shaft portion 64. In the present exemplary embodiment, the second shaft guiding portion 73b is set to be a hole longer than the first shaft guiding portion 73a on the plane of the lower-jaw connecting plate 73.

With the operations of the lower-jaw supporting plate 63 and the lower-jaw connecting plate 73 as described above, the lower-jaw bone portion 62 of the human body model 2 moves in the following manner at the time of opening and closing the mouth.

First, in a state where the mount is closed, that is, in a state where the forward end of the lower-jaw bone portion 62 is elevated, the lower-jaw supporting plate 63 and the lower-jaw connecting plate 73 are in a positional relationship as illustrated in Fig. 7. In other words, the first swing shaft portion 64 is in contact with the inner peripheral surface of the front end of the first shaft guiding portion 73a, and the second swing shaft portion 65 is in contact with the inner peripheral surface of the rear end of the second shaft guiding portion 73b.

At the time of opening the mouth, the lower-jaw supporting plate 63 rotates downward using, as the axis, the second swing shaft portion 65 supported by the inner peripheral surface of the rear end of the second shaft guiding portion 73b. This causes the first swing shaft portion 64 to slide backward within the first shaft guiding portion 73a. Once the first swing shaft portion 64 is brought into contact with the inner peripheral surface of the rear end of the first shaft guiding portion 73a, the first stage of the downward rotation of the lower-jaw supporting plate 63 ends.

When the mouth is more largely opened, the lower-jaw supporting plate 63 rotates further downward using, as the axis, the first swing shaft portion 64 supported by the inner peripheral surface of the rear end of the first shaft guiding portion 73a. This causes the second swing shaft portion 65 to slide forward within the second shaft guiding portion 73b. Upon the second swing shaft portion 65 being brought into contact with the inner peripheral surface of the front end of the second shaft guiding portion 73b, the downward rotation of the lower-jaw supporting plate 63 is restricted.

On the contrary, when the mouth is closed from the state where the mouth is largely opened, the lower-jaw supporting plate 63 rotates upward using, as the axis, the first swing shaft portion 64 supported by the inner peripheral surface of the rear end of the first shaft guiding portion 73a. This causes the second swing shaft portion 65 to slide backward within the second shaft guiding portion 73b. Upon the second swing shaft portion 65 being brought into contact with the inner peripheral surface of the rear end of the second shaft guiding portion 73b, the first stage of the upward rotation of the lower-jaw supporting plate 63 ends.

When the mouth is further closed, the lower-jaw supporting plate 63 further rotates upward using, as the axis, the second swing shaft portion 65 supported by the inner peripheral surface of the rear end of the second shaft guiding portion 73b. This causes the first swing shaft portion 64 to slide forward within the first shaft guiding portion 73a. Upon the first swing shaft portion 64 being brought into contact with the inner peripheral surface of the front end of the first shaft guiding portion 73a, the upward rotation of the lower-jaw supporting plate 63 is restricted.

As described above, in the present exemplary embodiment, at the time of opening the mouth of the human body model 2, the lower-jaw bone portion 62 rotates slightly downward on one axis located above to perform operation of the first stage. After this, the lower-jaw bone portion 62 rotates further downward on another axis in a state of being rotated downward while the one axis located above is being caused to slide forward, whereby the mouth of the human body model 2 is further largely opened.

In other words, according to the present exemplary embodiment, it is possible to reproduce movement close to the actual movement of the jaw of a human body at the time of opening and closing the mouth, in a manner such that the head of mandible of the mandible rotates at the recessed portion of the mandibular fossa of the temporal bone when the mouth starts to be opened, and the head of mandible slides forward out of this recessed portion and rotates when the mouth is more largely opened.

Incidentally, in the actual medical field, there are patients having the mouth of which degree of opening is small, due to differences in skeleton such as a temporomandibular joint, or the like. Thus, the present exemplary embodiment provides a function that can restrict the opening of a mouth of the human body model 2 in order to make it possible to do a highly precise training that is close to actual practices.

As the configuration for achieving this function, the skeleton base portion includes a lower-jaw swing restricting portion that can restrict the range of swing of the lower-jaw supporting plate 63. With this configuration, the range of swing of the lower-jaw supporting plate 63 can be restricted in a stepwise manner with restriction of the range of slide of the first swing shaft portion 64 and the second swing shaft portion 65 using the first shaft guiding portion 73a and the second shaft guiding portion 73b and also with the lower-jaw swing restricting portion.

In the present exemplary embodiment, the lower-jaw swing restricting portion is achieved with a rod-shaped body 67 disposed between the upper end portions of the two lower-jaw supporting plates 63, and also with a stopper 68 that restricts movement of the rod-shaped body 67.

The rod-shaped body 67 is disposed between the upper end portions of the two lower-jaw supporting plates 63, and moves integrally with the lower-jaw supporting plate 63. In the present exemplary embodiment, the rod-shaped body 67 moves in the substantially anteroposterior direction and above the upper-jaw supporting plate 71.

The stopper 68 is a member that can be brought into contact with the front side of the rod-shaped body 67 so as to be able to stop the rod-shaped body 67 moving forward. In the present exemplary embodiment, the stopper 68 is disposed in the structure for retaining the simulated skull 9, the structure being fixed to the upper surface of the upper-jaw supporting plate 71, and is disposed at a predetermined position in the path through which the rod-shaped body 67 moves.

This configuration enables the rod-shaped body 67 to move forward to the position of the stopper 68, which results in restriction of the range of downward rotation of the lower-jaw supporting plate 63 and the lower-jaw bone portion 62. In other words, it is possible to restrict the opening of the mouth of the human body model 2.

Furthermore, in the present exemplary embodiment, the position of the stopper 68 is configured so as to be able to be adjusted in a stepwise manner. For example, using a guide rail and a plurality of positioning members of the stopper 68, it is possible to adjust the position of the stopper 68 in a stepwise manner. This configuration enables the limit of the opening of the mouth of the human body model 2 to be adjusted in a stepwise manner. Thus, it is possible to reproduce various patients having different degrees of restriction of the mouth opening, and in addition, it is possible to do a highly precise training that is close to actual practices.

However, the lower-jaw swing restricting portion is not limited to the example described above, and can take any achieving mode, provided that the range of swing of the lower-jaw supporting plate 63 can be restricted. For example, it is possible to provide, as the lower-jaw swing restricting portion, a member that is brought into direct contact with either one of or both of the two lower-jaw supporting plates 63 to restrict the range of swing thereof, without providing the rod-shaped body 67 or the stopper 68. In addition, a member that can narrow the range of slide of the second swing shaft portion 65, the range being achieved with the second shaft guiding portion 73b, may be provided as the lower-jaw swing restricting portion.

Furthermore, there is a body position called a sniffing position as the body position of a patient taken in order to perform laryngeal extension at the time of tracheal intubation. At this body position, the neck portion is slightly bent backward, and the lower jaw is elevated. Next, the structure for achieving movement of elevation of the lower jaw (bending the neck portion backward) at the time of tracheal intubation will be described in detail with reference to Fig. 8.

The movement of elevation of the lower jaw is achieved mainly using a relationship between the first cervical-spine link 74, the second cervical-spine link 75, and the upper-jaw supporting plate 71.

The upper-jaw supporting plate 71 is supported by the second cervical-spine link 75 in a swingable manner at a position more forward than the backward end portion, and is configured so as to be able to perform the craniocaudal swing on an axis extending in the left-right direction. In addition, a tension coil spring is connected to the backward end portion of the upper-jaw supporting plate 71. Thus, in a case where this backward end portion ascends beyond a predetermined distance, a tension force acting downward is applied to this backward end portion. Furthermore, the range of slide, in the craniocaudal direction, of the backward end portion of the upper-jaw supporting plate 71 is restricted by the slide restricting portion 74a of the first cervical-spine link 74.

The slide restricting portion 74a of the first cervical-spine link 74 guides the backward end portion of the upper-jaw supporting plate 71 sliding in the craniocaudal direction, and at the same time, restricts the range of slide thereof. In the present exemplary embodiment, the slide restricting portion 74a is an elongated hole that is provided at the upper end portion of the first cervical-spine link 74 and penetrates in the thickness direction, and a slide pin 71a provided at the backward end portion of the upper-jaw supporting plate 71 is inserted and fitted in the slide restricting portion 74a. Thus, the upper-jaw supporting plate 71 can perform the craniocaudal swing within the range of slide defined by the slide restricting portion 74a of the first cervical-spine link 74.

Furthermore, the first cervical-spine link 74 is supported so as to be able to slide relatively to the second cervical-spine link 75 in the craniocaudal direction. In the present exemplary embodiment, the first cervical-spine link 74 has a lower end portion including a slide guide hole 74b that penetrates through in the thickness direction thereof, and a slide pin 77a is inserted and fitted in the slide guide hole 74b. This slide pin 77a is inserted into: the slide guide holes 74b of the two first cervical-spine links 74; the slide guide holes of the two second cervical-spine links 75 adjacent to both left and right outer sides of the first cervical-spine links 74 with the first cervical-spine links 74 being disposed therebetween; and a through hole of slider 77 adjacent to both left and right outer sides of the second cervical-spine links 75 with the second cervical-spine link 75 being disposed therebetween. In other words, the first cervical-spine link 74 can slide in the craniocaudal direction in a range in which the slide pin 77a can slide within the slide guide holes 74b of the first cervical-spine links 74.

Such a configuration enables the upper-jaw supporting plate 71 to perform the craniocaudal swing in the range of slide defined by the slide restricting portion 74a of the first cervical-spine link 74. In addition, as the first cervical-spine link 74 slides downward with respect to the second cervical-spine link 75, the range of downward slide of the backward end portion of the upper-jaw supporting plate 71 increases. As a result, it is possible to elevate the lower jaw of the human body model 2.

Incidentally, in the actual medical field, there are patients who have difficulty in bending the neck portion backward, in other words, difficulty in elevating the lower jaw due, for example, to differences in skeleton such as the cervical spine. In this respect, the present exemplary embodiment provides a function that can restrict movement of the elevation of the lower jaw of the human body model 2 in order to make it possible to do a highly precise training that is close to actual practices.

As the configuration for achieving this function, the skeleton base portion includes a cervical-spine slide restricting portion that can restrict the range of slide of the first cervical-spine link 74 in the craniocaudal direction. As this cervical-spine slide restricting portion restricts the length of downward slide of the first cervical-spine link 74, the length of downward slide of the backward end portion (slide pin 71a) of the upper-jaw supporting plate 71 is restricted. As a result, it is possible to restrict the angle of upward rotation of the forward end of the lower-jaw bone portion 62.

In the present exemplary embodiment, as this cervical-spine slide restricting portion, a slider 77, a slider adjusting pin 77b, and a positioning hole 78a, 78b, 78c, or 78d of the second cervical-spine link 75 are provided.

The slider 77 is configured so as to be able to adjust the distance of slide of the first cervical-spine link 74 in the downward direction in a stepwise manner. More specifically, the slider 77 is formed so as to be able to slide along the second cervical-spine link 75 in a range in which the slide pin 77a can slide in the slide guide hole 74b of the first cervical-spine link 74. In other words, the slider 77 has a shape in which the two second cervical-spine links 75 are interposed from the left and right outer sides, and is configured to be able to slide along the second cervical-spine links 75 in the craniocaudal direction. In addition, the slider 77 includes a slider adjusting pin 77b that can be inserted and fitted in the positioning hole 78a, 78b, 78c, or 78d of the second cervical-spine link 75. The positioning holes 78a, 78b, 78c, and 78d of the second cervical-spine link 75 are provided so as to be spaced apart at predetermined intervals in the craniocaudal direction.

A user causes the slider 77 to slide in the craniocaudal direction, and inserts and fits the slider adjusting pin 77b into any one of the positioning holes 78a, 78b, 78c, and 78d to set the position of the slider 77 in the craniocaudal direction. With this operation, the position of the slide pin 77a is determined, and as a result, the limit of slide of the first cervical-spine link 74 in the downward direction is also determined. This is because the inner peripheral surface of the upper end of the slide guide hole 74b is brought into contact with the slide pin 77a, and thus, the first cervical-spine link 74 cannot slide downward any further. In other words, when the slider adjusting pin 77b is inserted and fitted in the positioning hole 78d, the slide pin 77a is retained at the uppermost position. Thus, the range of slide of the first cervical-spine link 74 in the downward direction is minimum, and the limit of the elevation of the lower jaw reduces. On the contrary, when the slider adjusting pin 77b is inserted and fitted in the positioning hole 78a (state illustrated in Fig. 8), the slide pin 77a is retained at the lowermost position. Thus, the range of slide of the first cervical-spine link 74 in the downward direction is maximum, and the limit of the elevation of the lower jaw increases.

As described above, according to the present exemplary embodiment, it is possible to reproduce differences in the opening of the mouth or differences in the degree of the elevation of the lower jaw of individual patients due to differences in the skeleton such as the temporomandibular joint and the cervical spine, and hence, it is possible to do a highly precise training of medical procedures that are close to the actual medical field.

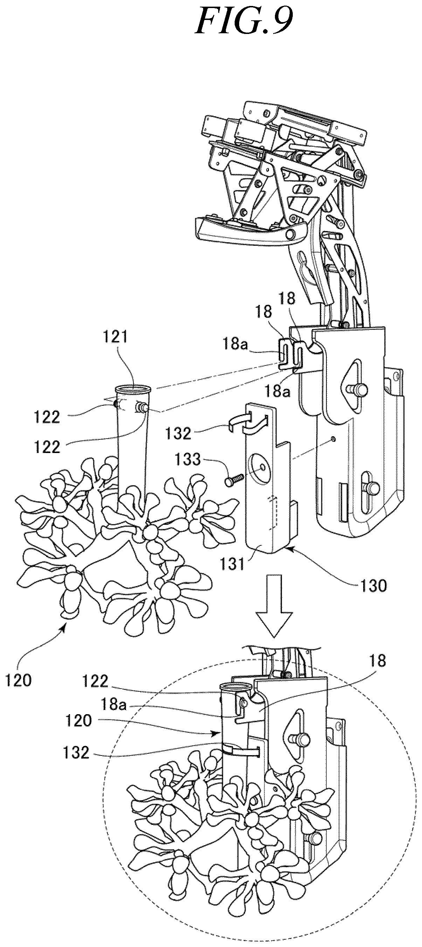

Furthermore, the present exemplary embodiment is configured such that the simulated bronchus portion 12 (see Fig. 2) connected to the in-body forming portion 20 together with the simulated lung portion 13 can easily be replaced with a simulated bronchus portion 120 used to do a training of bronchoscopic procedures. Such a configuration will be described with reference to Figs. 7 and 9. Fig. 9 is an exploded view illustrating the simulated bronchus portion 120 and the skeleton base portion.

The skeleton base portion includes a pair of bronchus supporting portions 18 that support the simulated bronchus portion 12 (see Fig. 2) or the simulated bronchus portion 120 at both left and right sides thereof in a detachable manner. The paired bronchus supporting portions 18 are each formed of a plate member provided so as to extend forward, and are disposed alongside each other so as to face each other in a manner such that the simulated bronchus portion 12 or the simulated bronchus portion 120 can be inserted between the opposing surfaces of these plate members.

The paired bronchus supporting portions 18 each include a bronchus engagement hole 18a. Each of bronchus engagement holes 18a includes a slit portion provided toward the backward from lower part of the upper end surface of the bronchus supporting portion 18, and a guide hole portion provided so as to extend upward from the backward end portion of the slit portion in parallel to the upper end surface of the bronchus supporting portion 18, the slit portion and the guide hole portion being communicated with each other.

On the other hand, the simulated bronchus portion 120 has a shape that simulates the trachea and the bronchus, and is configured to be hollow from a base-end-side opening 121 to the end of the bronchus. In addition, an opening end portion of the simulated bronchus portion 120 on the base end side is inserted into an opening 25a, at the end portion, of the trachea forming portion 25 of the in-body forming portion 20 to connect the in-body forming portion 20 and the simulated bronchus portion 120 to each other. In other words, it can be said that the simulated bronchus portion 120 includes the opening end portion on the base end side, which is to be inserted into the opening end portion of the in-body forming portion 20, and also includes the hollow portion that communicates with the opening (base-end-side opening 121) at the opening end portion thereof on the base end side.

With this configuration, the bronchoscope is inserted from the base-end-side opening 121, and is operable within the simulated bronchus portion 120, which makes it possible to do a training of a bronchoscopic procedure. In addition, although illustration is not given, an opening may be provided at the end of the bronchus of the simulated bronchus portion 120.

Here, the outer periphery of the circumferential wall located at the end edge of the opening end portion of the simulated bronchus portion 120 on the base end side and forming the base-end-side opening 121 is configured to protrude toward the radially outer side than the outer periphery of the circumferential wall located closer to the end of bronchus than the end edge. Such a protruding portion at the opening end portion of the simulated bronchus portion 120 on the base end side gets caught on the inner peripheral surface of the in-body forming portion 20, thereby preventing the in-body forming portion 20 from unintentionally detaching from the simulated bronchus portion 120.

Furthermore, the opening end portion of the simulated bronchus portion 120 on the base end side has an inner periphery of the circumferential wall formed such that the area of the base-end-side opening 121 is larger than the cross-sectional area of the hollow portion. In other words, the inner periphery of the circumferential wall of the opening end portion of the simulated bronchus portion 120 on the base end side is formed so that the inner periphery at the position of the end edge is larger than the inner periphery at the position located closer to the end of bronchus than the end edge. This configuration makes it possible to reduce the gap of the inner peripheral surface of the connecting portion between the in-body forming portion 20 and the simulated bronchus portion 120, and hence, it is possible to reduce a feeling of strangeness at this connecting portion in a case where the bronchoscope is inserted.

Furthermore, a pair of engaging protrusion 122 is provided in the opening end portion of the simulated bronchus portion 120 on the base end side, and protrudes from the surface of the outer periphery in directions opposite to each other toward the radially outer side.

The paired engaging protrusions 122 are respectively inserted into the bronchus engagement holes 18a of the paired bronchus supporting portion 18 described above. This causes the simulated bronchus portion 120 to be engaged with the paired bronchus supporting portions 18, whereby the simulated bronchus portion 120 can be attached to the skeleton base portion in a detachable manner. More specifically, each of the engaging protrusions 122 is inserted from the slit portion of the bronchus engagement hole 18a, and is caused to slide upward along the guide hole portion, whereby each of the engaging protrusions 122 of the simulated bronchus portion 120 is engaged with each of the bronchus engagement holes 18a. On the contrary, in a case of detachment, each of the engaging protrusions 122 of the simulated bronchus portion 120 is caused to slide downward along the guide hole portion of the bronchus engagement hole 18a of each of the bronchus supporting portions 18, and it is possible to detach it from the slit portion.

Furthermore, the present exemplary embodiment further includes a bronchus attaching portion 130 as illustrated in Fig. 9 in order to stably fix the simulated bronchus portion 120 to the skeleton base portion. The bronchus attaching portion 130 is configured to be freely attached to or detached from the skeleton base portion, and is used to replace a chest plate 17 (see Fig. 7) that supports the simulated lung portion 13, the simulated bronchus portion 12, and the like.

The bronchus attaching portion 130 includes a plane portion 131 on which the simulated bronchus portion 120 is placed, a base connecting portion 133 that is connected to the skeleton base portion on the back surface side of the plane portion 131, and a fixing belt 132 that fixes the simulated bronchus portion 120 placed on the plane portion 131.

In the present exemplary embodiment, the base connecting portion 133 is achieved with a bolt and an insert hole that allows the bolt to be inserted from the plane portion 131 side. The bolt is inserted into the insert hole, and is screwed to a bolt hole provided in the skeleton base portion, thereby connecting the bronchus attaching portion 130 to the skeleton base portion. However, instead of the method using such a bolt, other known methods may be used to achieve the base connecting portion 133, provided that the bronchus attaching portion 130 can be fixed to the skeleton base portion.

The fixing belt 132 is wrapped around the tubular outer peripheral surface of the simulated bronchus portion 120 as illustrated in Fig. 9, whereby the simulated bronchus portion 120 is detachably fixed on the plane portion 131. In the present exemplary embodiment, the fixing belt 132 is formed of two belt bodies that can be freely connected to and detached from each other using, for example, a hook-and-loop fastener. However, the specific mode thereof is not limited, provided that it can be wrapped round the outer peripheral surface of the simulated bronchus portion 120, and it can fix the simulated bronchus portion 120 on the plane portion 131.

In the example illustrated in Figs. 7 and 9, the bronchus attaching portion 130 is configured so as to be able to be attached to or detached from the skeleton base portion. However, the bronchus attaching portion 130 may be provided so as to be fixed to the skeleton base portion. In this case, the base connecting portion 133 may not be provided. It can be said that the skeleton base portion includes the plane portion 131, the fixing belt 132 that fixes the simulated bronchus portion 120 placed on the plane portion 131, and the pair of bronchus supporting portions 18 disposed alongside each other so as to face each other and each having the bronchus engagement hole 18a. Furthermore, it can be said that, in a state where the simulated bronchus portion 120 is disposed between the paired bronchus supporting portions 18, the paired engaging protrusions 122 are inserted in the bronchus engagement holes 18a of the paired bronchus supporting portions 18, and the simulated bronchus portion 120 is wrapped with the fixing belt 132, whereby the simulated bronchus portion 120 is attached to the skeleton base portion in a detachable manner.

With such a structure, it is possible to detachably attach, to the skeleton base portion, the simulated bronchus portion 120 having a hollow portion that allows a bronchoscope to be inserted, and has a complicated three-dimensional shape, and it is possible to appropriately do a training of bronchoscopic procedures.

### [Modification Example]

The exemplary embodiment described above is one example of the medical simulator 1. The medical simulator 1 is not limited to the configuration described above, and may be partially modified as appropriate, provided that it has at least a portion of the configuration described above.

For example, the medical simulator 1 may include at least: the skeleton base portion that serves as a base of the shape of a human body at least from a head to a neck portion; and the in-body forming portion 20 that can be attached to or detached from the skeleton base portion and has a shape that simulates a hollow in-body organ including a nasal cavity, an oral cavity, a pharynx, and a larynx, the in-body forming portion being integrally formed using a flexible material, thereby allowing a training of a medical procedure performed at least from a nose or a mouth. In other words, the in-body forming portion 20 may not include the trachea forming portion 25 or the esophagus forming portion 26. Similarly, the medical simulator 1 may not include the simulated bronchus portion 12, the simulated lung portion 13, an upper end portion 14 of a stomach connecting tube, or the simulated stomach portion 15. In addition, the medical simulator 1 may not have the configuration that faithfully reproduces movement of the lower jaw, or may not have the configuration that reproduces variation in the opening of the mouth or variation in the degree of elevation of the lower jaw. Furthermore, as described above, the configuration that allows the in-body forming portion 20 to be attached to or detached from the skeleton base portion is also not limited to the example described above, and hence, the nose-mouth supporting portion 40 may not be provided.

With the minimum configuration as described above, the medical simulator 1 does not have any unnatural joining seam or the like in the trachea in the body simulated by the in-body forming portion 20, and hence, it is possible to do a highly precise training that is close to actual practices.

In addition, it may be possible to employ a configuration in which the in-body forming portion 20 is not integrally formed. In this case, for example, there may be provided, for example, a nose-mouth supporting portion 40 that can be attached to or detached from an in-body forming portion having flexibility and a skeleton base portion that serves as a base of the shape of a human body at least from a head to a neck portion. This configuration makes it easy to interchange plural types of in-body forming portions 20. Thus, it is possible to do a training the trachea in the body of various patients, which makes it possible to do a highly precise training that is close to actual practices.

Yet furthermore, the medical simulator 1 may not include the in-body forming portion 20. In this case, for example, the medical simulator 1 may include at least a human body model 2 that simulates the external shape of, at least, the head of a human body. The skeleton base portion of the human body model 2 may include at least the lower-jaw bone portion 62, the lower-jaw supporting plate 63, and the lower-jaw connecting plate 73. Even with this configuration, it is also possible to do a highly precise training of medical procedures using the human body model 2 that faithfully reproduces the opening of the mouth of a human. As another example, the medical simulator 1 may include a human body model 2 that simulates the external shape of a human body at least from the head to the neck portion, and the skeleton base portion of the human body model 2 may include at least the first cervical-spine link 74, the second cervical-spine link 75, and the upper-jaw supporting plate 71. Even with this configuration, it is also possible to faithfully reproduce the movement (bending the neck portion backward) of elevation of the lower jaw of a human. In addition, the medical simulator 1 may include a human body model 2 that simulates at least the inside of the oral cavity of a human body, and the human body model 2 may include an upper-jaw tooth-row structure portion 50 that can reproduce at least breaking of a tooth.

Furthermore, in the exemplary embodiment described above, the movement of the lower jaw at the time of opening and closing the mouth is faithfully reproduced. In addition, the elevation of the lower jaw may be also reproduced.

The elevation of the lower jaw is a procedure performed, for example, at the time of airway management or tracheal intubation, and is a procedure in which the lower jaw is put more forward than the upper jaw. There is a method called a lower-jaw elevating method.

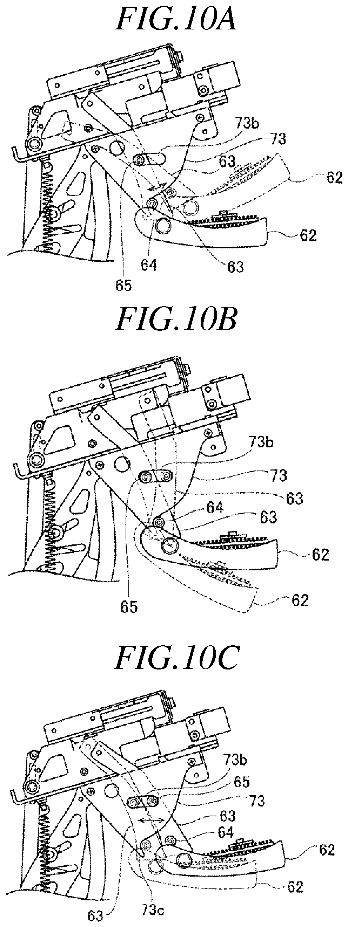

In order to further reproduce the elevation of the lower jaw, the lower-jaw connecting plate 73 may be modified as illustrated in Fig. 10. Figs. 10A, 10B, and 10C are diagrams illustrating a modification example of the lower-jaw connecting plate 73. Figs. 10A and 10B are schematic views illustrating reproduction of movement of the lower jaw at the time of opening and closing the mouth. Fig. 10C is a schematic view illustrating reproduction of elevation of the lower jaw.

As illustrated in Figs. 10A, 10B, and 10C, a lower-jaw connecting plate 73 according to the present modification example has a shape differing from that in the exemplary embodiment described above. In the present modification example, left and right lower-jaw connecting plates 73 can have the same shape when viewed from the left side or when viewed from the right side (Figs. 10 are side views as viewed from the right side). Thus, in the following description, either one of the left and right lower-jaw connecting plates 73 will be described with focus being placed on details differing from those in the exemplary embodiment described above.

More specifically, the lower-jaw connecting plate 73 includes a second shaft guiding portion 73b that is similar to that in the exemplary embodiment described above, and does not include the first shaft guiding portion 73a. In place of the first shaft guiding portion 73a, the lower-jaw connecting plate 73 includes a first shaft stopper 73c that restricts the backward slide of the first swing shaft portion 64 from a predetermined position. However, the inner peripheral surface of the first shaft guiding portion 73a on the backward restricts the backward slide of the first swing shaft portion 64 from this position, and hence, it can be said the first shaft guiding portion 73a also has the same function as the first shaft stopper 73c. Having said that, the first shaft stopper 73c does not have any configuration corresponding to the inner peripheral surface in the lower side of and the inner peripheral surface in the front of the first shaft guiding portion 73a, and hence, it can be said that the first shaft stopper 73c does not have any function of stopping the first swing shaft portion 64 or any function of restricting the forward slide from a certain position.

More specifically, the first shaft stopper 73c is a protruding piece that forms a portion (the lower end of the outer edge) of the lower portion of the outer edge of the lower-jaw connecting plate 73, and has a forward end surface that is brought into contact with the backward side surface of the first swing shaft portion 64 to restrict the backward slide of the first swing shaft portion 64.

On the other hand, the forward outer edge extending from the forward end surface of the first shaft stopper 73c of the lower-jaw connecting plate 73 slightly curves protrudingly toward the forward and the outer side and extends toward the front and upward direction. In other words, no portion that blocks the forward slide of the first swing shaft portion 64 is provided on the outer edge of the lower-jaw connecting plate 73 on the more forward side than the first shaft stopper 73c.

This enables the entire lower-jaw supporting plate 63 to slide forward to the range of slide of the second swing shaft portion 65 restricted by the second shaft guiding portion 73b as illustrated in Fig. 10C. In addition, the forward slide of the lower portion of the lower-jaw supporting plate 63 is not restricted, and hence, it is possible to push the lower-jaw bone portion 62 more forward than the configuration of the present exemplary embodiment described above.

Thus, according to the present modification example, it is possible to faithfully reproduce the elevation of the lower jaw.

In the present modification example, the first shaft stopper 73c that forms a portion of the outer edge of the lower-jaw connecting plate 73 restricts the backward slide of the first swing shaft portion 64. However, it may be possible to use other structures to restrict the backward slide of the first swing shaft portion 64 from a predetermined position without blocking it sliding forward from the predetermined position. For example, operation and effect similar to those of the first shaft stopper 73c can also be obtained using a through hole of the lower-jaw connecting plate 73 similar to the first shaft guiding portion 73a according to the present exemplary embodiment described above, rather than the shape similar to a shape that the first shaft stopper 73c has. In this case,the through hole has a backward hole shape same as the shape of the first shaft guiding portion 73a, and also has a forward hole shape in which the inner peripheral surface thereof is not brought into contact with the first swing shaft portion 64 in a range in which the first swing shaft portion 64 can slide forward.

Thus, it can be said that each of left and right lower-jaw connecting plates 73 may include a second shaft guiding portion 73b that guides the inserted second swing shaft portion 65 so as to be able to slide within a predetermined range, and also includes a first shaft restricting portion that restricts the backward slide of the first swing shaft portion 64, disposed lower than the second swing shaft portion 65, from a predetermined position without blocking possible forward slide from the predetermined position.

Here, the "without blocking possible forward slide from the predetermined position" means that sliding of the first swing shaft portion 64 forward is not blocked only with the first shaft restricting portion alone, and also means that, in a case where a member other than the first shaft restricting portion restricts a range in which the first swing shaft portion 64 can slide forward, the first shaft restricting portion does not block it sliding forward in this range.

Moreover, in the present modification example, the forward end surface of the first shaft stopper 73c curves in a concave manner (protruding backward) along a portion of the side circumferential surface of the first swing shaft portion 64. This makes it possible to restrict the first swing shaft portion 64 so as not to slide backward beyond the first shaft stopper 73c and stop the first swing shaft portion 64 using the forward end surface of the first shaft stopper 73c to cause the lower-jaw supporting plate 63 to smoothly swing with the first swing shaft portion 64 being the axis, as illustrated in Fig. 10A.

Here, Fig. 10A illustrates that the mouth opens and closes at the first stage, and also illustrates movement in which the lower-jaw supporting plate 63 performs the craniocaudal rotation (counterclockwise on the paper surface) with the second swing shaft portion 65 being axis, in a state where the second swing shaft portion 65 is brought into contact with and is supported by the inner peripheral surface, on the backward, of the second shaft guiding portion 73b.

Fig. 10B illustrates that the mouth opens and closes at the second stage, and also illustrates that the lower-jaw supporting plate 63 performs the craniocaudal rotation (counterclockwise on the paper surface) with the first swing shaft portion 64 being the axis, in a state where the first swing shaft portion 64 is in contact with the forward end surface of the first shaft stopper 73c. With this configuration, in Fig. 10B, the mouth is opened larger than that in Fig. 10A, and the mouth moves to close from this state.

As described above, Fig. 10C illustrates movement of elevation of the lower jaw. The second swing shaft portion 65 slides forward along the second shaft guiding portion 73b, and the first swing shaft portion 64 also moves forward.

Furthermore, at the temporomandibular joint, the head of mandible moves forward at the time of largely opening the mouth. In order to faithfully reproduce this movement of the head of mandible, the shape of the hole of the second shaft guiding portion 73b may be modified. For example, the inner peripheral surface at the upper center portion of the second shaft guiding portion 73b is slightly curved downward into a convex manner, and the opposing inner peripheral surface at the lower center portion is slightly curved into a concave manner (into a downwardly convex shape), whereby it is possible to reproduce the movement of the head of mandible as described above.

Details of each of the exemplary embodiments described above may also be identified in the following manner.

### [Supplemental Note 1]

A medical simulator that allows a training of a medical procedure performed at least from a nose or a mouth, including:
a skeleton base portion that serves as a base of a shape of a human body at least from a head to a neck portion;
an in-body forming portion that is attachable to and detachable from the skeleton base portion and has a shape that simulates a hollow in-body organ including a nasal cavity, an oral cavity, a pharynx, and a larynx, the in-body forming portion having flexibility; and
a nose-mouth supporting portion that is attachable to and detachable from the in-body forming portion and the skeleton base portion, in which
a nasal-cavity forming portion and an oral-cavity forming portion of the in-body forming portion are separate from each other,
the nose-mouth supporting portion is formed using a material harder than the nasal-cavity forming portion and the oral-cavity forming portion, and
in a state of being attached to the in-body forming portion, the nose-mouth supporting portion lies in a space between the nasal-cavity forming portion and the oral-cavity forming portion to support the nasal-cavity forming portion, and holds an upper wall of the oral-cavity forming portion in a sandwiching manner in conjunction with an upper tooth-row structure portion disposed on the oral cavity side of the oral-cavity forming portion.

### [Supplemental Note 2]

A medical simulator that simulates at least an external shape of a head of a human body, including:
a lower-jaw bone portion;
two lower-jaw supporting plates that are respectively provided to extend upward from left and right backward end portions of the lower-jaw bone portion; and
two lower-jaw connecting plates that are disposed at portions corresponding to left and right buccal regions and extend in a craniocaudal direction, in which
each of the lower-jaw supporting plates includes a first swing shaft portion and a second swing shaft portion disposed at positions spaced apart from each other in a direction in which each of the lower-jaw supporting plates extends, axial directions of the first swing shaft portion and the second swing shaft portion being a left-right direction, and
each of the lower-jaw connecting plates includes:
   a first shaft guiding portion that guides the first swing shaft portion sliding when a lower-jaw supporting plate swings with the second swing shaft portion being an axis; and
   a second shaft guiding portion that guides the second swing shaft portion sliding when a lower-jaw supporting plate swings with the first swing shaft portion being a center.

### [Supplemental Note 3]

A medical simulator that simulates a human-body external shape at least from a head to a neck portion, including:
a first cervical-spine link portion and a second cervical-spine link portion, each of which is provided to extend at least in the neck portion in a craniocaudal direction; and
an upper-jaw supporting plate that is provided to extend in the head in an anteroposterior direction, in which
the second cervical-spine link swingably supports the upper-jaw supporting plate, and
the first cervical-spine link is supported so as to be able to slide in a craniocaudal direction relatively to the second cervical-spine link, and includes a slide restricting portion that guides a backward end portion of the upper-jaw supporting plate sliding in the craniocaudal direction and restricts a range of the slide.

### [Supplemental Note 4]

A medical simulator that simulates at least an inside of an oral cavity of a human body, including:
an upper-jaw tooth-row structure portion that is disposed within a simulated oral cavity and has a shape that simulates an upper-jaw tooth row, in which
the upper-jaw tooth-row structure portion includes:
   a movable tooth-row portion that has a shape that simulates a first tooth row serving as a portion of tooth row at a forward and center, the first tooth row including at least a central incisor in an upper jaw;
   a fixed tooth-row portion that has a shape that simulates a remaining second tooth row and swingably supports the movable tooth-row portion; and
   swing restricting means that restricts swing of the movable tooth-row portion at a position where the second tooth row and the first tooth row form a line of the upper-jaw tooth row, the swing restricting means removing the restriction with application of a predetermined external force.

## Claims

1. A medical simulator that allows a training of a medical procedure performed at least from a nose or a mouth, comprising:
a skeleton base portion that serves as a base of a shape of a human body at least from a head to a neck portion; and
an in-body forming portion that is attachable to and detachable from the skeleton base portion and has a shape that simulates a hollow in-body organ including a nasal cavity, an oral cavity, a pharynx, and a larynx, the in-body forming portion being integrally formed using a flexible material.

2. The medical simulator according to claim 1, further comprising:
a nose-mouth supporting portion that is attachable to and detachable from the in-body forming portion and the skeleton base portion, wherein
a nasal-cavity forming portion and an oral-cavity forming portion of the in-body forming portion are separate from each other,
the nose-mouth supporting portion is formed using a material harder than the nasal-cavity forming portion and the oral-cavity forming portion, and
in a state of being attached to the in-body forming portion, the nose-mouth supporting portion lies in a space between the nasal-cavity forming portion and the oral-cavity forming portion to support the nasal-cavity forming portion, and holds an upper wall of the oral-cavity forming portion in a sandwiching manner in conjunction with an upper tooth-row structure portion disposed on the oral cavity side of the oral-cavity forming portion.

3. The medical simulator according to claim 2, further comprising:
a pharynx wall plate that supports, from a back surface side, a portion of the in-body forming portion that corresponds to a pharynx wall in a state where the in-body forming portion is attached to the skeleton base portion, wherein
the in-body forming portion has a back surface side including a plate connecting portion that allows the in-body forming portion to be attached to or detached from the pharynx wall plate, and
the nose-mouth supporting portion includes skeleton connecting portions that are directed upward and provided on left and right sides of the nose-mouth supporting portion, the nose-mouth supporting portion including an area to support the nasal-cavity foriming portion from below, the area being disposed between the skelton connecting portions, the skeleton connecting portions allowing the nose-mouth supporting portion to be attached to and detached from the skeleton base portion.

4. The medical simulator according to any one of claims 1 to 3, wherein
the skeleton base portion includes:
a lower-jaw bone portion;
two lower-jaw supporting plates that are respectively provided to extend upward from left and right backward end portions of the lower-jaw bone portion; and
two lower-jaw connecting plates that are disposed at portions corresponding to left and right buccal regions and extend in a craniocaudal direction,
each of the lower-jaw supporting plates includes a first swing shaft portion and a second swing shaft portion disposed at positions spaced apart from each other in a direction in which each of the lower-jaw supporting plates extends, the first swing shaft portion and the second swing shaft portion being provided so as to protrude with a left-right direction thereof being an axial direction thereof, and
each of the lower-jaw connecting plates includes:
a first shaft guiding portion that guides the first swing shaft portion sliding when a lower-jaw supporting plate swings with the second swing shaft portion being an axis; and
a second shaft guiding portion that guides the second swing shaft portion sliding when a lower-jaw supporting plate swings with the first swing shaft portion being a center.

5. The medical simulator according to claim 4, wherein
the skeleton base portion further includes a lower-jaw swing restricting portion that is able to restrict a range of swing of each of the lower-jaw supporting plates, and
the range of swing of each of the lower-jaw supporting plates can be restricted in a stepwise manner with restriction of the range of slide of the first swing shaft portion and the second swing shaft portion using the first shaft guiding portion and the second shaft guiding portion and also with the lower-jaw swing restricting portion.

6. The medical simulator according to any one of claims 1 to 3, wherein
the skeleton base portion includes:
a lower-jaw bone portion;
two lower-jaw supporting plates that are respectively provided to extend upward from left and right backward end portions of the lower-jaw bone portion; and
two lower-jaw connecting plates that are disposed at portions corresponding to left and right buccal regions and extend in a craniocaudal direction,
each of the lower-jaw supporting plates includes a first swing shaft portion and a second swing shaft portion disposed at positions spaced apart from each other in a direction in which each of the lower-jaw supporting plates extends, the first swing shaft portion and the second swing shaft portion being provided so as to protrude with a left-right direction thereof being an axial direction thereof, and
each of the lower-jaw connecting plates includes:
a second shaft guiding portion that guides the inserted second swing shaft portion so as to be able to slide within a predetermined range; and
a first shaft restricting portion that restricts backward slide from a predetermined position with the first swing shaft portion disposed lower than the second swing shaft portion, the first shaft restricting portion not blocking possible forward slide from the predetermined position.

7. The medical simulator according to any one of claims 1 to 6, wherein
the skeleton base portion further includes a first cervical-spine link portion and a second cervical-spine link portion that are provided to extend at least in the neck portion in a craniocaudal direction, and also includes an upper-jaw supporting plate that is provided to extend in the head in an anteroposterior direction,
the second cervical-spine link swingably supports the upper-jaw supporting plate,
the first cervical-spine link is supported so as to be able to slide in a craniocaudal direction relatively to the second cervical-spine link, and includes a slide restricting portion that guides a backward end portion of the upper-jaw supporting plate sliding in the craniocaudal direction and restricts a range of the slide, and
the skeleton base portion further includes a cervical-spine slide restricting portion that is able to restrict a range of slide of the first cervical-spine link in a craniocaudal direction.

8. The medical simulator according to any one of claims 1 to 7, further comprising:
a simulated bronchus portion that includes an opening end portion on a base end side, which is to be inserted into an opening end portion of the in-body forming portion, and also includes a hollow portion that communicates with an opening at the opening end portion on the base end side, wherein
the skeleton base portion further includes:
a plane portion on which the simulated bronchus portion is placed;
a fixing belt that is wrapped around an outer peripheral surface of the simulated bronchus portion placed on the plane portion to fix the simulated bronchus portion in an attachable and detachable manner; and
a pair of bronchus supporting portions that are disposed alongside each other so as to face each other, each of the bronchus supporting portions having a bronchus engagement hole,
the simulated bronchus portion further includes a pair of engaging protrusions that protrude from a surface of an outer periphery of the opening end portion on the base end side in directions opposite to each other toward a radially outer side, and
in a state where the simulated bronchus portion is disposed between the paired bronchus supporting portions, the paired engaging protrusions are inserted in bronchus engagement holes of the paired bronchus supporting portions, and the simulated bronchus portion is wrapped with the fixing belt to attach the simulated bronchus portion to the skeleton base portion in a detachable manner.
